# EUROPÄISCHE PATENTSCHRIFT

(11) **EP 3 916 264 B1**
(45) Veröffentlichungstag und Bekanntmachung des Hinweises auf die Patenterteilung: **30.11.2022**
(21) Anmeldenummer: 21174224.2
(22) Anmeldetag: 18.05.2021
(51) Int. Cl.: F16D 65/00, F16D 69/02

(54) **DÄMPFUNGSMATERIAL FÜR EINE DÄMPFUNGS- ODER ZWISCHENSCHICHT FÜR BREMSBELÄGE UND EIN VERFAHREN ZUR HERSTELLUNG DES DÄMPFUNGSMATERIALS**
DAMPING MATERIAL FOR A DAMPING OR INTERMEDIATE LAYER FOR BRAKE LININGS AND A METHOD FOR PRODUCING THE DAMPING MATERIAL
MATIÈRE D'AMORTISSEMENT POUR UNE COUCHE D'AMORTISSEMENT OU INTERMÉDIAIRE POUR PLAQUETTES DE FREIN ET PROCÉDÉ DE FABRICATION DE LA MATIÈRE D'AMORTISSEMENT

(30) Priorität: 19.05.2020 DE 102020113510
(43) Veröffentlichungstag der Anmeldung: 01.12.2021
(73) Patentinhaber: TMD Friction Services GmbH, 51381 Leverkusen (DE)
(72) Erfinder: MÜLLER, Dr. Georg, 45128 Essen (DE); BENDT, Harald, 51371 Leverkusen (DE); LIEB, Katja, 40668 Meerbusch (DE); LAKOTA, Mirza, 41516 Grevenbroich (DE)
(74) Vertreter: Weckenbrock, Matthias

(56) Entgegenhaltungen:
- EP-A1- 0 621 414
- EP-A1- 2 634 448
- EP-B1- 0 849 488
- US-A- 5 407 034

## Beschreibung

Die vorliegende Erfindung betrifft ein Dämpfungsmaterial für eine Dämpfungs- oder Zwischenschicht (auch underlayer genannt) für Bremsbeläge zur Erhöhung der Komforteigenschaften von Bremsbelägen bzw. Bremsen. Ferner betrifft die Erfindung auch einen Bremsbelag mit einer Dämpfungs- oder Zwischenschicht aus dem Dämpfungsmaterial und ein Verfahren zur Herstellung des Dämpfungsmaterials.

Bei heute eingesetzten Bremsen sind die Komforteigenschaften der Bremsen von großer Bedeutung. Hierzu zählen die Geräuschentwicklung der Bremse und die mechanischen Vibrationen während des Bremsvorgangs. Beide Phänomene sind mit dem Auftreten von Schwingungen verknüpft, die je nach Art des Bremssystems bei unterschiedlichen Frequenzen auftreten können. Um die Schwingungen zu unterdrücken bzw. um die Schwingungen zu dämpfen und damit beide Phänomene zu minimieren, kann zwischen der Reibschicht und der Trägerplatte eines Bremsbelages, eine Zwischenschicht eingefügt werden. Dabei muss die Zwischenschicht neben den Komforteigenschaften noch eine hohe mechanische Festigkeit aufweisen.

Es sind Bremsbacken oder Bremsbeläge im Stand der Technik bekannt, die aus einem Belagträger und einem Reibbelag bestehen, sowie aus einer zwischen dem Reibbelag und dem Belagträger angeordneten Zwischenschicht als Dämpfungselement zur Vermeidung von Reibungsquietschen. Mit einer solchen Zwischenschicht lassen sich Resonanzschwingungen, die beim Bremsen auftreten, dämpfen. Solche Dämpfungsschichten sind beispielsweise aus EP 0 621 414 A1, US 5,407,034, DE 10 2013 108 159 A1, DE 42 315 49 A1 oder EP 0 849 488 B1 bekannt und können aus verschiedenen Materialien oder Materialmischungen bestehen. Weiterhin wird im Stand der Technik auch die Verwendung von Dämpfungsblechen bei Scheibenbremsbelägen für den oben genannten Zweck beschrieben; vgl. EP 1 035 345 A2.

Zusätzlich gibt es im Stand der Technik auch Vorschläge für Reibbeläge oder Reibmaterialien, die als solche bereits geräuschmindernde oder Dämpfungseigenschaften aufweisen, wie z.B. gemäß US 9,765,836 B2.

Darüber hinaus ist bei der Verwendung von Dämpfungsschichten als Zwischenlage zwischen dem eigentlichen Reibbelag und dem Belagträger neben den hohen mechanischen Anforderungen auch darauf zu achten, dass keine Lagentrennung zwischen dem Reibbelag und der Zwischenlage oder auch keine Kantenlösung auftreten. Als Kantenlösung wird das teilweise Ablösen der Zwischenlage von der Belagträgerplatte bezeichnet.

Die bislang erzielten Ergebnisse sind bezüglich der genannten Eigenschaften weiterhin verbesserungswürdig, insbesondere im Hinblick auf die Verwendung von Reib- und Bremsbelägen in der KFZ- /PKW- Industrie.

Aufgabe der vorliegenden Erfindung war daher die Bereitstellung eines Bremsbelags, insbesondere für Scheibenbremsen, bei dem unter Beibehaltung oder Verbesserung der Performanceeigenschaften eine Optimierung der Komforteigenschaften, insbesondere im Hinblick auf eine Reduktion von Geräuschentwicklung und auftretenden mechanischen Vibrationen im laufenden Betrieb, festgestellt werden kann.

Diese Aufgabe wird durch ein erfindungsgemäßes Dämpfungsmaterial für eine Dämpfungs- oder Zwischenschicht für Bremsbeläge und insbesondere durch einen Bremsbelag mit einer Dämpfungsschicht oder Zwischenlage aus dem erfindungsgemäßen Dämpfungsmaterial, welche zwischen dem eigentlichen Reibbelag und dem Belagträger (der Belagträgerplatte) angeordnet ist, gelöst.

Die gewünschte Minimierung oder Unterdrückung von Schwingungen an einem Bremsbelag im laufenden Betrieb kann durch im Stand der Technik bekannte und angewandte Dämpfungsmessungen bestimmt werden. In der Reib- bzw. Bremsbelagentwicklung findet die sogenannte Eigenfrequenzmessung bevorzugt Anwendung. Um die Entwicklung effizient zu gestalten, wird ein Referenzbremsbelag, der eine Dämpfungsschicht zwischen Belagträger und Reibbelag aufweist, verwendet.

Die erfindungsgemäß bevorzugten Mindestanforderungen an einen solchen erfindungsgemäßen Bremsbelag können bezüglich der wichtigsten Parameter wie folgt zusammengefasst werden:
(1) Scherfestigkeit von > 400N/cm2.
(2) Scherfestigkeit nach Temperaturbelastung von >250 N/cm2.
(3) Bei der Eigenfrequenzmessung sollte die Dämpfung bei einem Wert von >15 ‰ liegen.
(4) Kompressibilität sollte bei einem Wert zwischen 150 µm und 200 µm liegen.
(5) Keine Lagentrennung nach thermischer Belastung (Bewertung der Rissbildung ≥ 9).
(6) Keine Ablösung von der Trägerplatte nach mechanischer Belastung (Bewertung der Rissbildung ≥ 9).

Die Scherfestigkeit (1) wird in Anlehnung an ISO 6312 bestimmt.

Scherfestigkeit (2) nach Belastung: Hier wird der Test wie unter (1) nach einer hohen thermischen Beanspruchung durchgeführt. Hierbei gelten für den dynamischen Test folgende Bedingungen, s. folgende Tabelle:

| **Reihe** | **Name** | **n** | **vₐ [km/h ]** | **vₑ [km/ h]** | **P [ba r]** | **a [%]** | **Tₐ [°C]** | **Zuluft** |
|---|---|---|---|---|---|---|---|---|
| **3** | Einbremsen | 10 0 | 100 | 50 | 25 | - | 100 | 100% |
| **4** | Initialfading | 5 | 135 | 80 | - | 65 | 150; 225; 300; 350; 400 | Variabe I |
| **5** | Reinigungsst opps | 3 | 100 | 5 | - | 10 0 | 100 | 100% |
| **6** | Reibwertbesti mmung | 5 | 100 | 50 | 25 | - | 100 | Variabe I |
| **7** | Zeitungstest | 10 | 105 | 5 | - | 11 0 | 100; 175; 250; 300; 350 400; 425; 450; 475; 500 | Variabe I |
| **8** | Einzelbremsu ng aus 200km/h | 2 | 200 | 5 | - | 11 0 | 100 | Variabe I |
| **9** | Reinigungsst opps | wie Reihe 5 | | | | | | |
| **10** | Leistungstest | 15 | 200 | 100 | - | 60 | 100; 250; 400; 450; 550 600; 625; 650; 675; 700 705; 710; 715; 720; 725 | Variabe I |
| **11** | Reinigungsst opps | wie Reihe 5 | | | | | | |
| **12** | Reibwertbesti mmung | wie Reihe 6 | | | | | | |

| | | | | | | | | |
|---|---|---|---|---|---|---|---|---|
| n: Anzahl der Bremsungen vₐ: Geschwindigkeit zu Beginn der Bremsung vₑ: Geschwindigkeit bei Beendigung der Bremsung p: Bremsdruck a: Verzögerung in g, wobei 100% 1 g sind, g = 9,81 m/s2 Ta: Temperatur der Bremsscheibe zu Beginn der Bremsung | | | | | | | | |

(3): Die Eigenfrequenzmessung wurde in Anlehnung an die Norm: DIN ISO 6267 durchgeführt. Die Dämpfung wird über die Abnahme der ersten Amplitude ermittelt.
(4): Die Kompressibilität wird gemäß der ISO-Norm 6310 bestimmt. Hierbei wir die Kompressibilität in µm angegeben. In der Regel wird eine Toleranz von ±15 % bei diesem Wert akzeptiert. Der Wert muss für das neue System innerhalb der Toleranzwerte sein, die auch für das alte System gegolten haben.
(5): Bewertung von Lagentrennung und (6) der Abtrennung von der Trägerplatte:

Die Bewertung des Belages wird nach dem Belastungstest für Prüfung (2) durchgeführt. Hierbei gilt folgende Skala für die Bewertung der Schäden.

| | | | |
|---|---|---|---|
| 1 | = völlige Ablösung / Trennung / Zerstörung | 6 | = leicht bis mittel |
| 2 | = sehr stark | 7 | = leicht |
| 3 | = stark | 8 | = sehr leicht |
| 4 | = mittel bis stark | 9 | = ansatzweise |
| 5 | = mittel | 0 | = nicht sichtbar (10) |

Nur bei einer Einstufung in die Kategorien 9 oder 10 gilt der Test als bestanden. Hierbei wird für die Einstufung in die Kategorie 9 ein Metallblatt verwendet mit einer Dicke von 50 µm. Nur wenn das Metallblatt nicht in einen sich gebildeten Riss geschoben werden kann, erfüllt der Riss noch die Kriterien um in Stufe 9 eingestuft zu werden.

Erfindungsgemäß hat sich gezeigt, dass ein solches Eigenschaftsprofil nur durch Dämpfungsschichten aus speziellen elastischen Materialien herbeigeführt werden kann. Weiterhin hat sich gezeigt, dass diese elastischen Materialien durch den Einsatz von Harzen und Fasern weiter verstärkt werden sollten, um die geforderten hohen mechanischen (z.B. hohe Scherfestigkeit) und hohen Dämpfungseigenschaften in Kombination zu erreichen.

Weiterhin war es eine zusätzliche Aufgabe der vorliegenden Erfindung, Materialien mit den genannten Eigenschaften möglichst kostengünstig zur Verfügung zu stellen, was gleichzeitig den möglichen Einsatz von sogenannten kostengünstigen Standardmaterialien und den weitest gehenden Verzicht auf teure Spezialkomponenten bedeutet. Bei elastomeren Standardmaterialien handelt es sich erfindungsgemäß um Standardelastomere, von denen die bekannten Standardkautschuke bevorzugt sind:
- NBR:: Acrylnitril-Butadien-Kautschuk
- BR:: Butadien-Kautschuk
- IIR:: Isobuten-Isopren-Kautschuk
- BIIR:: Brombutyl Kautschuke
- CIIR:: Chlorbutyl Kautschuk / chlorierter Butyl-Kautschuk
- EPM:: Ethylen-Propylen-Copolymer / Ethylen-Propylen-Kautschuk
- EPDM:: Ethylen-Propylen-Dien-Kautschuk
- NR:: Naturkautschuk
- SBR:: Styrol-Butadien-Kautschuk
- CM:: Chloriertes Polyethylen
- IR:: Isopren-Kautschuk
- AEM:: Acryl-Ethylen-Polymethylen-Kautschuk
- EAM:: Ethylen-Vinylacetat-Kautschuk
- ACM:: Acrylatkautschuk

Diese Standardelastomere stellen allein oder auch in Mischungen miteinander den elastomeren Hauptbestandteil des erfindungsgemäßen Dämpfungsmaterials dar. Diesem elastomeren Hauptbestandteil können noch andere elastomere Substanzen/Komponenten und/oder verschiedene Füllstoffe und/oder Fasern zugesetzt werden. Bei den anderen elastomeren Komponenten handelt es sich bevorzugt um Kautschuke, die zu der Kategorie der Standardkautschuke zählen. Hier können aber auch Fluorkautschuke verwendet werden, wie diese z.B. in der DE 10 2013 108 159 A1 beschrieben sind. Besonders bevorzugt für die Zwecke der vorliegenden Erfindung, und zwar sowohl allein als auch in Kombination mit anderen hier genannten Elastomeren oder Kautschuken, sind Acrylat-Kautschuke, wie sie z.B. von der Firma Denka Company Ltd., Tokio (Japan) unter der Marke Denka ER vertrieben werden. Hierbei handelt es sich um Ethylen-Vinylacetat-Acrylsäureester-Copolymere, die allgemein zu der Kunststoffkategorie EVAC gehören. Diese Copolymere werden von der Firma Denka in verschiedenen Typen angeboten, die sich u.a. durch verschiedene Reste, wie z.B. Epoxy und Carboxyl, unterscheiden, welche der Polymerhärtung (sog. cure sites) dienen. Die genannten Elastomere zeichnen sich insbesondere durch hohe Temperatur- und Ölbeständigkeiten aus.

Bei den verschiedenen Füllstoffen, die erfindungsgemäß auch als Mischung verschiedener Füllstoffe vorliegen können, handelt es sich bevorzugt um Ruße und/oder Silikate.

Bei den erfindungsgemäß geeigneten Fasern, die auch als Mischung verschiedener Fasern vorliegen können, handelt es sich bevorzugt um Mineralfasern, und/oder Aramidfasern, und/oder Metallfasern, wobei der Begriff Metallfasern auch Metallwolle und Metallspäne für die Zwecke der Erfindung umfasst.

Somit handelt es sich bei dem erfindungsgemäß einsetzbaren Füllstoffen und Fasern um solche, die im Stand der Technik zur Herstellung von Reibbelägen bekannt sind.

Der Einsatz von Füllstoffen und insbesondere Fasern führt zu einer sogenannten verstärkten Kautschukphase. Daher werden solche Füllstoffe hier auch als aktive Füllstoffe bezeichnet. Diese zeichnen sich dadurch aus, dass sie entweder eine Partikelgröße von <100 nm aufweisen und eine Wechselwirkung mit der Kautschukphase eingehen, oder sie weisen ein hohes Aspektverhältnis, Verhältnis der Höhe oder Tiefe einer Struktur zu ihrer kleinsten Breite, (als Fasern oder Plättchen) auf. Bei den Fasern oder exfolierten Schichten, z. B. getrennte Schichten von Schichtsilikaten, ist entscheidend, dass sie mindestens in einer Dimension eine Größe von < 500 µm aufweisen.

Neben diesen werden auch weitere Füllstoffe in der Rezeptur eingesetzt, die keine spezifische Verbesserung der Eigenschaften herbeiführen. Diese können verschiedenster Natur sein. Sie zeichnen sich üblicherweise durch ihre partikuläre Struktur aus. Sie gehen entweder keine starke Wechselwirkung mit den übrigen Bestandteilen in der Mischung ein oder weisen eine Partikelgröße von > 100 nm auf, so dass ihre spezifische Oberfläche so niedrig ist, dass auch die Anzahl der Wechselwirkungen mit Mischungsbestandteilen niedrig ist.

Geeignete Füllstoffe sind beispielsweise Rußpartikel und/oder Verbundstoffe aus Silikat und Silan, insbesondere Silikatfasern oder Schichtsilikate, die mit Silanen gecoated wurden. Geeignete Füllstoffe sind beispielsweise auch BaSO4, CaCO3, Zn und/oder Graphit.

Zusammengefasst weißt die Phase 1 (Kautschuk enthaltend) beispielsweise folgende Zusammensetzung auf, siehe Tabelle:

| Bestandteil | Bevorzugte Zusammensetzung (Gew.-%) | Besonders bevorzugte Zusammensetzung | Spezielle Zusammensetzung [Gew.-%] bezogen auf Phase 1 |
|---|---|---|---|
| Kautschuk | 3-50 | 5-25 | 15 |
| Fasern | 20-90 | 30-60 | 50 |
| Füllstoffe | 0-50 | 15-40 | 35 |
| Harze | 0-5 | 0-3 | 0 |

Überraschenderweise hat sich gezeigt, dass die weitaus besten Ergebnisse bzgl. der Dämpfungseigenschaften im Hinblick auf die Dämpfung von Bremsgeräuschen und mechanischen Vibrationen dann erreicht wurden, wenn das Dämpfungsmaterial in Form eines sogenannten zweiphasigen Systems (Phase 1/Phase 2)hergestellt worden ist. Dabei enthält die erste Phase (Phase 1) die erfindungsgemäßen Kautschukpartikel und weist eine partikuläre Struktur mit Partikelgrößen von kleiner als 4 mm auf.

Die Partikel der Phase 1 können miteinander ein Netzwerk im Dämpfungsmaterial bilden, insbesondere ein perkolierendes Netzwerk. Hierfür ist ein Partikelanteil im Dämpfungsmaterial von > 50 Vol.% besonders vorteilhaft. Bei dem vorbeschriebenen Netzwerk können mehrere Partikel der Phase 1 - Material im Dämpfungsmaterial auf- bzw. aneinander liegen und Stränge bzw. unregelmäßige zusammenhängende Strukturen aus Phase 1 im Dämpfermaterial ausbilden. Das Netzwerk hat vorteilhafterweise erhöhte Dämpfungseigenschaften im Vergleich zu vereinzelten Partikeln gleicher Menge.

Die Partikelgröße ergibt sich aus dem Herstellungsverfahren der Phase 1 - Partikel. Diese werden durch ein Mahlverfahren hergestellt. Hierbei wird bevorzugt eine Lochblende mit einem Durchmesser von 4 mm verwendet. Das bedeutet, alle Partikel die aus der Mahlkammer in den Sammelbehälter überführt werden, können nur einen maximalen Durchmesser von 4 mm aufweisen.

Der Kautschukanteil in der Phase 1 beträgt 3 bis 50 Gew.-% insbesondere 5 bis 25 Gew.%, und besonders bevorzugt 15 Gew.-%, bezogen auf das Gewicht der Phase 1.

Die in der Phase 1 (verstärkte Kautschukphase) enthaltenen Füllstoffe/Füllstoffmischungen und/oder Fasern/Fasermischungen weisen Teilchengrößen von bevorzugt 4 bis 200 nm für die Füllstoffe und 0,75 bis 1,2 mm (Faserlängen) für die Fasern auf.

Die Phase 2 (Matrixphase) enthält das Harz bzw. Harzmischungen und gegebenenfalls weitere Füllstoffe bzw. Füllstoffmischungen und gegebenenfalls weitere Fasern bzw. Fasermischungen. Zusammengefasst weißt die Phase 2 beispielsweise folgende Zusammensetzung auf, siehe Tabelle:

| Bestandteil | Bevorzugte Zusammensetzung | Besonders bevorzugte Zusammensetzung | Spezielle Zusammensetzung [Gew.-%] bezogen auf Phase 2 |
|---|---|---|---|
| Harz | 5-50 | 10-35 | 18 |
| Fasern | 10-90 | 10-70 | 54 |
| Füllstoffe | 0-50 | 15-40 | 28 |

Die in Phase 2 eingesetzten Harze machen in dieser Phase einen Anteil von 5 bis 50 Gew.-% aus. Grundsätzlich sind alle für den Einsatz in Bezug auf Reibbeläge bekannten Harze, Harzmischungen bzw. Bindemittel erfindungsgemäß geeignet, beispielsweise Phenol-FormaldehydHarz oder Polyacrylnitril. Dies gilt sowohl für Phase 2 als auch für Phase 1.

Die Fasern machen hier einen Anteil von 10 bis 90 Gew.-% aus. Die bevorzugten Fasern sind hier Metallfasern. Diese machen insbesondere einen Anteil von 32 Gew.-% aus. Aramidfasern sind bevorzugt zu einem Anteil zwischen 1 und 6 Gew.-% vertreten. Alle Gew.-%-Angaben beziehen sich auf das Gesamtgewicht der Phase 2.

Das Volumenverhältnis von Phase 1 zu Phase 2 zur Herstellung des Dämpfungsmaterials beträgt bevorzugt von 50/50 über 70/30 bis hin zu 90/10 und alle möglichen Zwischenwerte (Angaben in Vol.-%). Der Anteil von Phase 1 wird vorteilhafterweise deswegen so hoch gewählt, um die vorbeschriebenen Netzwerke bzw. zusammenhängenden Strukturen im Dämpfungsmaterial bzw. im Bremsbelag zu bilden, die nur aus Phase 1 bestehen. Hierzu gehört insbesondere ein perkolierendes Netzwerk aus Phase 1. Theoretisch bildet sich dieses Netzwerk bei annährend gleich großen Teilchen erst ab einem Volumenanteil von >74 Vol.% aus. Bei Teilchen unterschiedlicher Größe liegt der Wert umso höher je größer die Verteilung der Partikeldurchmesser ist. Gleichzeitig sollte die Phase 2 vorteilhafterweise noch eine stabile Matrix ausbilden können, um eine hohe Festigkeit des Dämpfungsmaterials zu gewährleisten. Dies ist bei diesen Volumenanteilen besonders gut der Fall.

Auch enthält die Phase 2 Füllstoffe, welche zu 0 bis 50 Gew.-% in der Phase 2 vorhanden sind. Die Gew.-% -Angaben für die Komponenten der Phase 2 beziehen sich jeweils auf das Gesamtgewicht der Phase 2.

Die bevorzugten Füllstoffe und/oder Fasern sind für Phase 1 und Phase 2 identisch, wobei vorzugsweise nur der Phase 1 Kautschuk und die typischen den Kautschuk verstärkenden, partikulären und aktiven Füllstoffe zugegeben werden und nur der Phase 2 das Harzsystem zugegeben wird. In einer weiteren bevorzugten Ausführungsform kann auch die Phase 1 Harz oder Harzmischungen bis zu 5 Gew.-% enthalten. Der Harzanteil ist in der Phase 1 stets kleiner als in der Phase 2 (Harzphase). In der bevorzugten Ausführungsform ist die Phase 1 (Kautschukphase) frei oder weitgehend frei (wie nachfolgend definiert) von Harzanteilen.

Die Phase 2 umgibt die Phase 1, d.h. die Partikel der Phase 1, vorzugsweise so, dass diese in einer Matrix bestehend aus Phase 2 eingebettet sind. Dabei ist der Umschließungsgrad aber bevorzugt überwiegend kleiner als 100%, so dass die Partikel der Phase 1 noch im Kontakt zu einander stehen. Der Aufbau des zweiphasigen, erfindungsgemäßen Dämpfungsmaterials ist mit dem Lichtmikroskop aber auch schon mit bloßem Auge erkennbar.

Die Phase 2 kann in dem Dämpfungsmaterial ein Netzwerk bzw. Matrix ausbilden. Dieses Netzwerk ist vorteilhafterweise komplementär zu dem vorbeschriebenen Netzwerk aus Phase 1.

Die überlegenen Dämpfungseigenschaften beruhen in erster Linie auf der Phase 1, während die erforderliche hohe mechanische Stabilität durch die Phase 2 beigesteuert wird.

Um die überlegenen Eigenschaften der erfindungsgemäßen Dämpfungsmaterialien bzw. Dämpfungsschichten sicher zu stellen, ist die Einhaltung des erfindungsgemäßen Herstellungsprozesses erforderlich. Die erhaltenen Dämpfungsmaterialien werden durch den Herstellungsprozess geprägt; sogenannte Product-by-Process Charakterisierung.

Zur Herstellung der Phase 1 (Kautschukphase, insbesondere verstärkt) werden, beispielsweise in einem Kneter, die Füllstoffe und/oder die Fasern in den Kautschuk und ggfs. das Harz eingearbeitet bzw. geknetet. Hierbei erzeugt der Kneter bzw. das Kneten sowohl eine Dispersion der Füllstoffe und/oder der Fasern als auch eine gleichmäßige Verteilung der genannten Komponenten.

Es kann zwischen aktiven und nicht aktiven Füllstoffen unterschieden werden. Zu den aktiven oder die Kautschukphase verstärkenden Füllstoffen zählen z.B. Rußpartikel und insbesondere auch das System Silikat/Silan. Andere aktive Füllstoffe sind zum Beispiel Silikatfasern oder Schichtsilikate, die mit Silanen gecoated wurden.

Nichtaktive Füllstoffe sind beispielsweise BaSO4, CaCO3, Zn, oder Graphit.

Ein Knetprozess ist grundsätzlich von einem Mischprozess zu unterscheiden. Bei einem Knetprozess werden die Bestandteile oberhalb der Glasübergangstemperatur des Kautschukes so verarbeitet, dass sowohl eine Dispersion als auch eine Distribution der Füllstoffe erreicht werden kann. Dies ist in einem Mischprozess nicht zu erreichen. Der "Mahlschritt" erfolgt nach dem zumindest ein Knetschritt bzw. Kneten erfolgt ist.

Durch einen nach dem Kneten stattfindenden Mahlprozess werden die Partikel der Phase 1 erzeugt. Hierbei liegt die bevorzugte Partikelgröße für alle Bestandteile der Phase 1 bei kleiner 4 mm. Das Mahlen kann eine Vorzerkleinerung mit Messermühle umfassen, beispielsweise bei 650 U/min mit einem Lochsieb von 16 mm. An die Vorzerkleinerung kann sich eine Feinzerkleinerung mit Schlagkreuzmühle anschließen, beispielweise bei 4000 U/min mit einem Quadratlochsieb von 4 mm. Phase 1 liegt durch das Mahlen in Partikelform vor.

Hieran schließt sich ein Mischprozess für die Phasen 1 und 2 an, bei dem die Phase 1-Partikel in der Matrix bestehend aus der Phase 2, insbesondere dem Harz, verteilt werden. Hierbei behalten die durch den Mahlprozess hergestellten Partikel im Wesentlichen ihre Größe bei. Die Rohstoffe der Phase 2 bilden zu Beginn des Mischprozesses noch keine einheitliche Phase aus. Alle Rohstoffe liegen noch als Pulver oder Faserbündel vor. Durch den Mischprozess wird ein Gemenge aus den verschiedenen Rohstoffen der Phase 2 und den Partikeln der Phase 1 erzeugt. Während der Mischphase werden vor allem noch die Faserbündel aufgeschlossen.

Die Mischung kann durch einen Mischer der Firma Eirich (Eirich-Intensivmischer) hergestellt werden, beispielsweise bei einer Mischtemperatur von Raumtemperatur bis 50°C, einer Wirblergeschwindigkeit von 5 bis 40 m/s, einer Troggeschwindigkeit Stufe 1 oder 2 und bei einer Mischzeit von 1 min bis 30 min.

Hier ist der grundsätzliche Unterschied zwischen einem Knetprozess und einem Mischprozess von Bedeutung. Bei einem Knetprozess wird bei einem erhöhten Druck und einer erhöhten Temperatur gearbeitet (T>100°C). Dies führt zu einer Phase bei der die zu dispergierenden Füllstoffe schon in den Kautschuk eingearbeitet werden und von diesem umschlossen werden. Bei einem reinen Mischprozess fehlt der Druck. In der Regel wird auch bei Raumtemperatur gemischt. Die Bestandteile werden zwar verteilt, doch findet die Einbettung der Füllstoffe in die Kautschukphase noch nicht statt. Somit liegt die Mischung nach dem Mischprozess als Gemenge vor. Das Ergebnis nach dem Knetprozess kann als Dispersion verstanden werden

Die Phasen 1 und 2 treten bei dem sich anschließenden Pressprozess zur Herstellung des Dämpfungsmaterials (in Form einer Materialschicht oder einer Folie) miteinander in Wechselwirkung. Während des Pressprozesses verflüssigt sich das Harz aus der Phase 2 und umschließt die übrigen Partikel aus der Phase 2 und die bis zu 4 mm großen Partikel der Phase 1. Dabei ist der Umschließungsgrad bevorzugt überwiegend kleiner als 100%, so dass die Partikel der Phase 1 noch im Kontakt zu einander stehen können.

Der Herstellungsprozess eines erfindungsgemäßen Bremsbelags kann an einer kontinuierlich arbeitenden Presse erfolgen. Hier werden eine Reibbelagmischung und eine Dämpfungsschicht aus dem vorbeschriebenen Dämpfungsmaterial an beispielsweise zwei Stationen in die Pressform eingefüllt. Beispielsweise kann hierbei die Presstemperatur 100°C bis 200°C, die Presszeit 60s bis 420s, und der Pressdruck: 3 bar bis 200 bar betragen. Das Verhältnis von Reibmaterial zu Zwischenschichtmaterial beträgt hierbei vorzugsweise von 30 : 1 Gew.%: Gew.% bis hin zu 2 : 1 Gew.%: Gew.%.

Im Anschluss wird eine Belagträgerplatte auf eine Kavität gelegt. Eine zugeordnete Spiegelplatte, ein Stempel und eine Profilplatte haben dabei vorzugsweise eine Temperatur, die zwischen 130°C und 190°C beträgt. Die Presszeit beträgt vorzugsweise zwischen 1 min und 6 min. Der spezifische Druck liegt beispielsweise bei 6 N/mm² und 145 N/mm².

Die Beläge werden anschließend noch gehärtet. Dieser Prozess kann stationär in einem Ofen durchgeführt werden. Die Härtetemperatur kann beispielsweise Raumtemperatur bis 300°C und die Härtezeit 30 min bis 24 h betragen.

Die Beläge können ebenfalls durch ein kontinuierliches Verfahren gehärtet werden, beispielsweise bei einer Härtetemperatur ab Raumtemperatur bis 700°C; und Härtezeit von 5 min bis 30 min.

Zusammenfassend können die bevorzugten Merkmale der erfindungsgemäßen Dämpfungsmaterialformulierung wie folgt festgehalten werden:
1) In der Kautschukphase (Phase 1) ist kein Harz enthalten oder der Harzanteil in der Kautschukphase liegt bei kleiner/gleich 5 Gew.-%
2) In der Kautschukphase sind keine anderen organischen Vernetzungschemikalien enthalten, die eine kovalente Vernetzung des Kautschuks bewirken
3) In der gesamten Mischung sind keine Bestandteile neben dem Kautschuk enthalten, die eine Zersetzungstemperatur von <130°C aufweisen
4) In der Kautschukphase werden verstärkende Füllstoffe mit eingearbeitet. Diese müssen beim Knetprozess dispergiert und verteilt werden.

In der Matrix (Phase 2) befinden sich neben dem Harz, das die Matrix ausbildet, im Wesentlichen wieder aktive und nicht aktive Füllstoffe und/oder Fasern.

Weiterhin ist der Anteil der Phase 1 von Bedeutung. Hier wird bevorzugt ein Anteil von größer 50 Gew.-%, insbesondere 60-70 Gew.-%, bezogen auf das Gewicht des fertigen Dämpfungsmaterials, verwendet.

Es hat sich gezeigt, dass besonders vorteilhafte Ergebnisse für die erfindungsgemäßen Dämpfungsschichten mit NBR-Kautschuken und den genannten Acrylat-Kautschuken erzielt werden können. Da es sich bei den erfindungsgemäß geeigneten Kautschuken vielfach um Standardkautschuke handeln kann, weisen die erfindungsgemäßen Dämpfungsmaterialien auch deutliche Kostenvorteile gegenüber Lösungen mit z.B. Spezialpolymeren auf.

Die erfindungsgemäße Zwischen- oder Dämpfungsschicht kann ein- oder mehrschichtig ausgeführt sein. Sie ist bevorzugt einschichtig. Ihre Dicke variiert in Abhängigkeit von der Ausgestaltung von Belagträger und Reibbelag. Sie beträgt jedoch in der Regel ca. 2 bis 4 mm.

Die Dämpfungsschicht wird bevorzugt über eine Klebeschicht und/oder über Bolzen mit der Belagträgerplatte verbunden.

Die Dämpfungsschicht wird über eine gute Adhäsion zwischen der Dämpfungsschicht und der Reibschicht mit dieser verbunden. Das Harz aus der Dämpfungsschicht und das Harz aus der Reibbelagschicht sind vor dem finalen Pressvorgang noch nicht ausreagiert. Die beiden Schichten können so eine Diffusionsschicht bilden. In dieser Diffusionsschicht bilden sich dann durch die Reaktion der Harze kovalente Bindungen aus, die zu einer insgesamt starken Bindung beitragen. Ebenfalls werden die Schichten bevorzugt nicht eben in die Pressform eingefüllt. Durch die raue, nicht glatte Oberflächenstruktur vergrößert sich die Kontaktfläche der Phasen zueinander. Dies vergrößert ebenfalls die Anbindung der Phasen untereinander. D. h., bevorzugt werden die Mischungen für das Dämpfungs- und Reibmaterial übereinander geschichtet und dann, wie angegeben, gemeinsam in einem Arbeitsgang verpresst.

Nachfolgend werden die wichtigsten und bevorzugten Gegenstände, Merkmale und Aspekte der vorliegenden Erfindung zusammengefasst:
Die Erfindung umfasst ein Dämpfungsmaterial für eine Dämpfungs- oder Zwischenschicht eines Bremsbelags, welches zumindest einen Kautschukanteil und einen Harzanteil aufweist, wobei in dem Dämpfungsmaterial eine Vielzahl makroskopische, heterogen abgegrenzte Bereiche (Phase 1) ausgebildet sind, die Kautschuk-Bereiche mit einem erhöhten Kautschukanteil von mindestens 3 Gew.-% bis maximal 50 Gew.-% und Harz-Bereiche (Phase 2) mit einem erhöhten Harzanteil von mindestens 5 Gew.-% umfassen, und wobei die Kautschuk-Bereiche frei von Harz sind oder einen Harzanteil von kleiner/gleich 5 Gew.-% aufweisen, und die Harz-Bereiche frei von Kautschuk sind.

Unter heterogen abgegrenzten Bereichen sind insbesondere solche Bereiche zu verstehen, die einen unregelmäßigen Umriss bzw. eine unregelmäßige Außengrenze aufweisen. Dabei sind die Umrisse bzw. Außengrenzen der einzelnen Bereiche zueinander bevorzugt weitestgehend unterschiedlich.

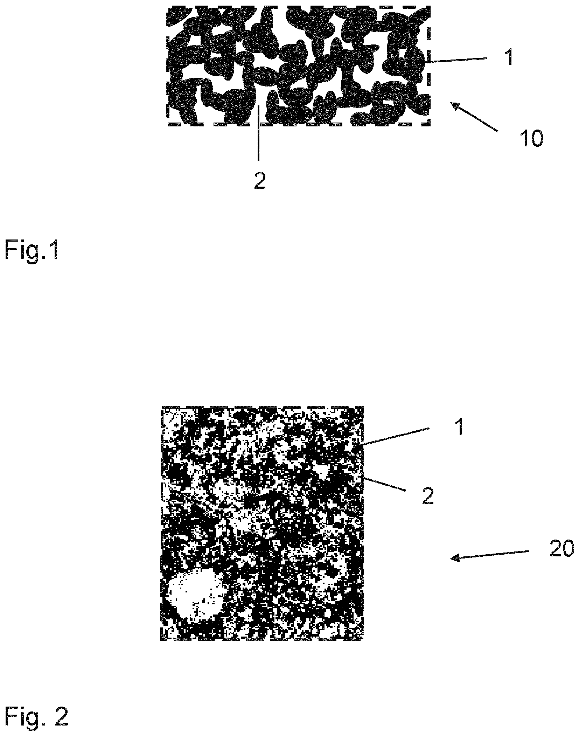

Im Sinne der vorliegenden Erfindung sind die Kautschukbereiche (Phase 1) dann frei von Harz und die Harzbereiche (Phase 2) frei von Kautschuk, wenn Kautschuk oder Harz in dem jeweils anderen Bereich nicht vorhanden oder nicht nachweisbar ist, oder wenn Kautschuk oder Harz in dem jeweilig anderen Bereich mit dem bloßen Auge oder mit dem Lichtmikroskop nicht nachweisbar ist, was z.B. durch klare (scharfe) Bereichs- oder Phasengrenzen, wie in den Fig. 1 bis 3 dargestellt, angezeigt wird.

Eine andere mögliche Bezeichnung für diese erfindungsgemäße Bedeutung des Begriffs "frei von" wäre, dass der entsprechende Bereich/die Phase "frei oder weitgehend frei" von der jeweilig anderen Komponente ist. Das ist beispielsweise der Fall, wenn die andere Komponente nur in einer sehr geringen Menge in den anderen Bereich gelangt ist, beispielsweise durch eindiffundieren. Eine geringe Menge ist beispielsweise, wenn Harz bzw. Kautschuk weniger als 1 Gew.-% in dem anderen Bereich ausmachen.

In einer Schnittansicht des Dämpfungsmaterials kann sich zumindest einer der Kautschuk-Bereiche mindestens 4 mm lang erstrecken.

In einer Schnittansicht des Dämpfungsmaterials kann sich zumindest einer der Harz-Bereiche mindestens 1 mm lang erstrecken.

Die Kautschuk-Bereiche (Phase 1) des Dämpfungsmaterials weisen vorzugsweise einen Kautschukanteil von 5 bis 25 Gew.-% auf.

Die Kautschuk-Bereiche des Dämpfungsmaterials enthalten vorzugsweise einen NBR-Kautschuk oder den genannten EVAC-Kautschuk als einzigen Kautschuk oder in Mischung mit weiteren Kautschuken.

Die Kautschuk-Bereiche des Dämpfungsmaterials weisen vorzugsweise einen Faseranteil von 30 bis 60 Gew.-% und/oder einen Füllstoffanteil von 15 bis 40 Gew.-% auf.

Die Harz-Bereiche (Phase 2) des Dämpfungsmaterial weisen vorzugsweise einen Harzanteil von 10 bis 35 Gew.-% und/oder einen Faseranteil von 10 bis 70 Gew.-% auf.

Die Harz-Bereiche betten die Kautschuk-Bereiche im Dämpfungsmaterial vorzugsweise ein.

Die Bestandteile der Harzbereiche und der Kautschukbereiche sind vorzugsweise in den jeweiligen Bereichen homogen verteilt.

Das Dämpfungsmaterial kann zu 50 bis 70 Gew% aus Kautschuk-Bereichen bestehen.

Das Dämpfungsmaterial besteht bevorzugt zu 50 bis 90 Vol% aus Kautschuk-Bereichen.

Das Dämpfungsmaterial besteht besonders bevorzugt zu 65 bis 80 Vol% aus Kautschuk-Bereichen.

Ferner umfasst die vorliegende Erfindung einen Bremsbelag mit einem Belagträger und einer Reibschicht, wobei zwischen Belagträger und Reibschicht eine Dämpfungs- oder Zwischenschicht angeordnet ist, die aus einem Dämpfungsmaterial gemäß der vorangehenden Beschreibung gebildet ist. Schließlich betrifft die Erfindung auch ein Herstellungsverfahren für ein Dämpfungsmaterial wie vorstehend beschrieben, umfassend folgende Verfahrensschritte:
a) Kautschukvormischung
   (i) Bereitstellung der Ausgangsmaterialien für Kautschuk-Bereiche,
   (ii) Zumindest ein Kneten der Ausgangsmaterialien aus Schritt (i),
   (iii) Mahlen der in Schritt (ii) erhaltenen Masse auf eine Partikelgröße von kleiner 4 mm,
b) Harzmischung und Verteilung der Partikel aus Schritt (iii) in der Harzmischung,
   (iv) Bereitstellung der Rohstoffe für Harz-Bereiche, welche Harz oder Harzmischungen umfassen,
   (v) Mischen der Partikel aus Schritt (iii) mit den Rohstoffen aus Schritt (iv) und
   (vi) Verpressen der in Schritt (v) erhaltenen Masse zu dem gewünschten Dämpfungsmaterial.

Im Rahmen einer Belagherstellung kann die im Schritt (v) erhaltene Masse direkt zur Herstellung einer Dämpfungsschicht auf einer Reibschicht verwendet werden. Hierbei werden die Masse und die Mischung für die Reibschicht, wie beschrieben, übereinander geschichtet und gemeinsam verpresst.
Fig. 1 zeigt in schematischer, vergrößerter Darstellung den makroskopischen Aufbau (der Oberfläche) des erfindungsgemäßen Dämpfungsmaterials 10, wie er mit bloßem Auge oder mit einem Lichtmikroskop zu erkennen ist. Hier ist die Phase 1, die verstärkte Kautschukphase, in schwarzer Färbung dargestellt (1), während die Matrixphase 2 (bestehend aus Harz und weiteren Fasern und Füllstoffen), in welche die Phase 1 eingebettet ist, ohne Einfärbung dargestellt ist (2).
Fig. 2 zeigt den Aufbau des erfindungsgemäßen Dämpfungsmaterials 20 gemäß einer ersten Ausführungsform nach einem Schertest. Hier bestehen 70 Vol.-% des Materials aus der schwarzen verstärkten Kautschukphase 1 und 30 Vol.-% aus der Matrixphase 2 (ohne Einfärbung dargestellt), in welche die Kautschukphase 1 eingebettet ist. Die Kautschukphase 1 zeigt klare Bereichsgrenzen zur Matrixphase 2.

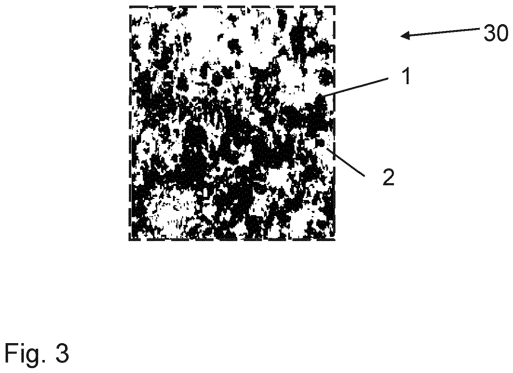

Fig. 3 entspricht in Darstellung und Beschreibung der Fig. 2, wobei das Dämpfungsmaterial 30 gemäß einer zweiten Ausführungsform in diesem Fall aus 50 Vol.-% Kautschukphase 1 und zu 50 Vol.-% aus Matrix- oder Harzphase 2 besteht. Die Bereichs- oder Phasengrenzen sind auch hier klar definiert.

Die Figuren 1-3 zeigen die bevorzugte Ausführungsform der vorliegenden Erfindung, bei der die Kautschukphase 1 frei oder weitgehend frei von Harzbestandteilen im Sinne der vorliegenden Erfindung ist.

### Bezugszeichenliste

- 1: Phase
- 2: Matrixphase
- 10: Dämpfungsmaterial
- 20: Dämpfungsmaterial
- 30: Dämpfungsmaterial

## Patentansprüche

1. Dämpfungsmaterial für eine Dämpfungs- oder Zwischenschicht eines Bremsbelags, welches zumindest einen Kautschuk-Anteil und einen Harz-Anteil aufweist, wobei in dem Dämpfungsmaterial (10, 20, 30) eine Vielzahl mikroskopischer, heterogen abgegrenzter Bereiche ausgebildet sind, die Kautschuk-Bereiche (1) mit einem erhöhten Kautschuk-Anteil von 3 Gew.-% bis 50 Gew.-%, einem Faseranteil von 20 bis 90 Gew.-% und einem Füllstoffanteil von 0 bis 50 Gew.-%, jeweils bezogen auf das Gewicht der Kautschuk-Bereiche (1), und Harz-Bereiche (2) mit einem erhöhten Harzanteil von 5 bis 50 Gew.-%, einem Faseranteil von 10 bis 90 Gew.-% und einem Füllstoffanteil von 0 bis 50 Gew.-%, jeweils bezogen auf das Gewicht der Harz-Bereiche (2), umfassen, und wobei die Kautschuk-Bereiche (1) frei von Harz und die Harz-Bereiche (2) frei von Kautschuk sind, oder die Kautschuk-Bereiche (1) bis zu 5 Gew.-% Harz aufweisen, erhältlich aus einer Kautschuk-Vormischung und einer Harz-Mischung durch ein Verfahren, welches die folgenden Verfahrensschritte umfasst:
a) Kautschukvormischung
(i) Bereitstellung der Ausgangsmaterialien für die Kautschuk-Bereiche (1),
(ii) Zumindest ein Kneten der Ausgangsmaterialien aus Schritt (i),
(iii) Mahlen der in Schritt (ii) erhaltenen Masse auf eine Partikelgröße von kleiner 4 mm,
b) Harz-Mischung und Verteilung der Partikel aus Schritt (iii) in der Harz-Mischung,
(iv) Bereitstellung der Rohstoffe der Harz-Bereiche (2), welche Harz oder Harzmischungen umfassen,
(v) Mischen der Partikel aus Schritt (iii) mit den Rohstoffen aus Schritt (iv) und
(vi) Verpressen der im Schritt (v) erhaltenen Masse zu dem gewünschten Dämpfungsmaterial (10, 20, 30).

2. Dämpfungsmaterial nach Anspruch 1, **dadurch gekennzeichnet, dass** die Kautschuk-Bereiche (1) einen Kautschukanteil von 5 - 25 Gew.-%, einen Faseranteil von 30 - 60 Gew.-%, einem Füllstoffanteil von 15 - 40 Gew.-% und einen Harzanteil von 0-5 Gew.-% jeweils bezogen auf das Gewicht der Kautschuk- Bereiche (1), aufweisen.

3. Dämpfungsmaterial nach Anspruch 1 oder 2, **dadurch gekennzeichnet, dass** die Harz-Bereiche (2) einen Harzanteil von 10 - 35 Gew.-%, einen Faseranteil von 10 - 70 Gew.-% und einen Füllstoffanteil von 15 - 40 Gew.-%, jeweils bezogen auf das Gewicht der Harz- Bereiche (2), aufweisen.

4. Dämpfungsmaterial nach einem der Ansprüche 1 bis 3, **dadurch gekennzeichnet, dass** die Kautschuk-Bereiche (1) ein Netzwerk im Dämpfungsmaterial (10, 20, 30) bilden.

5. Dämpfungsmaterial nach einem der vorhergehenden Ansprüche, **dadurch gekennzeichnet, dass** die Harzbereiche (2) ein Netzwerk im Dämpfungsmaterial (10, 20, 30) bilden.

6. Dämpfungsmaterial nach einem der vorhergehenden Ansprüche, **dadurch gekennzeichnet, dass** die Kautschuk-Bereiche (1) einen NBR-Kautschuk oder einen Kautschuk auf der Basis von Ethylen-Vinylacetat-Acrylat als einzigen Kautschuk oder in Mischung mit weiteren Kautschuken enthalten.

7. Dämpfungsmaterial nach einem der vorhergehenden Ansprüche, **dadurch gekennzeichnet, dass** die Harz-Bereiche (2) die Kautschuk-Bereiche (1) im Dämpfungsmaterial (10, 20, 30) einbetten.

8. Dämpfungsmaterial nach einem der vorhergehenden Ansprüche, **dadurch gekennzeichnet, dass** die jeweiligen Bestandteile der Harzbereiche (2) und der Kautschukbereiche (1) in den jeweiligen Bereichen homogen verteilt sind.

9. Dämpfungsmaterial nach einem der vorhergehenden Ansprüche, **dadurch gekennzeichnet, dass** das Dämpfungsmaterial (10, 20, 30) zu 50 bis 90 Vol.-% aus Kautschuk-Bereichen (1) ausgebildet ist.

10. Dämpfungsmaterial nach einem der vorangehenden Ansprüche, **dadurch gekennzeichnet, dass** die Kautschukbereiche (1) weniger als 1 Gew.-% Harz aufweisen.

11. Verwendung eines Dämpfungsmaterials nach einem der vorangehenden Ansprüche als Dämpfungs- oder Zwischenschicht für einen Bremsbelag, die zwischen dem Bremsbelagträger und der Reibschicht angeordnet ist.

## Claims

1. Damping material for a damping layer or interlayer of a brake lining, having at least a rubber fraction and a resin fraction, there being formed in the damping material (10, 20, 30) a multiplicity of microscopic, heterogeneously delimited areas which comprise rubber areas (1) having an increased rubber fraction of 3% by weight to 50% by weight, a fibre fraction of 20% to 90% by weight and a filler fraction of 0% to 50% by weight, based in each case on the weight of the rubber areas (1), and
resin areas (2) having an increased resin fraction of 5% to 50% by weight, a fibre fraction of 10% to 90% by weight and a filler fraction of 0% to 50% by weight, based in each case on the weight of the resin areas (2),
and where the
rubber areas (1) are free from resin and the resin areas (2) are free from rubber, or the rubber areas (1) have up to 5% by weight of resin, obtainable from a rubber premix and a resin mixture by a method which comprises the following method steps:
a) rubber premixing
(i) providing the starting materials for the rubber areas (1),
(ii) at least once kneading the starting materials from step (i),
(iii) grinding the material obtained in step (ii) to a particle size of less than 4 mm,
b) resin mixing and distributing the particles from step (iii) in the resin mixture,
(iv) providing the raw materials of the resin areas (2), which comprise resin or resin mixtures,
(v) mixing the particles from step (iii) with the raw materials from step (iv) and
(vi) pressing the material obtained in step (v) to form the desired damping material (10, 20, 30).

2. Damping material according to Claim 1, **characterized in that** the rubber areas (1) have a rubber fraction of 5-25% by weight, a fibre fraction of 30-60% by weight, a filler fraction of 15-40% by weight and a resin fraction of 0-5% by weight, based in each case on the weight of the rubber areas (1).

3. Damping material according to Claim 1 or 2, **characterized in that** the resin areas (2) have a resin fraction of 10-35% by weight, a fibre fraction of 10-70% by weight and a filler fraction of 15-40% by weight, based in each case on the weight of the resin areas (2).

4. Damping material according to any of Claims 1 to 3, **characterized in that** the rubber areas (1) form a network in the damping material (10, 20, 30).

5. Damping material according to any of the preceding claims, **characterized in that** the resin areas (2) form a network in the damping material (10, 20, 30).

6. Damping material according to any of the preceding claims, **characterized in that** the rubber areas (1) comprise an NBR rubber or a rubber based on ethylene-vinyl acetate-acrylate as single rubber or in a mixture with other rubbers.

7. Damping material according to any of the preceding claims, **characterized in that** the resin areas (2) embed the rubber areas (1) in the damping material (10, 20, 30).

8. Damping material according to any of the preceding claims, **characterized in that** the respective constituents of the resin areas (2) and of the rubber areas (1) are homogeneously distributed in the respective areas.

9. Damping material according to any of the preceding claims, **characterized in that** the damping material (10, 20, 30) is formed to an extent of 50% to 90% by volume of rubber areas (1).

10. Damping material according to any of the preceding claims, **characterized in that** the rubber areas (1) have less than 1% by weight of resin.

11. Use of a damping material according to any of the preceding claims as a damping layer or interlayer for a brake lining, said layer being arranged between the brake lining carrier and the friction layer.

## Revendications

1. Matériau d'amortissement pour une couche d'amortissement ou une couche intermédiaire d'une garniture de frein, qui présente au moins une part de caoutchouc et une part de résine, dans lequel dans le matériau d'amortissement (10, 20, 30), une pluralité de zones microscopiques, délimitées de manière hétérogène sont formées qui comprennent des zones de caoutchouc (1) dotées d'une part élevée en caoutchouc de 3 % en poids à 50 % en poids, d'une part de fibres de 20 à 90 % en poids et d'une part de charge de 0 à 50 % en poids, à chaque fois par rapport au poids des zones de caoutchouc (1), et des zones de résine (2) dotées d'une part élevée en résine de 5 % en poids à 50 % en poids, d'une part de fibres de 10 à 90 % en poids et d'une part de charge de 0 à 50 % en poids, à chaque fois par rapport au poids des zones de résine (2), et les zones de caoutchouc (1) étant exemptes de résine et les zones de résine (2) étant exemptes de caoutchouc, ou les zones de caoutchouc (1) présentant jusqu'à 5 % en poids de résine,
pouvant être obtenu à partir d'un prémélange de caoutchouc et d'un mélange de résine par un procédé qui comprend les étapes de procédé suivantes :
a) prémélange de caoutchouc
(i) mise à disposition des matières de départ pour les zones de caoutchouc (1),
(ii) au moins un pétrissage des matières de départ de l'étape (i),
(iii) broyage de la masse obtenue dans l'étape (ii) à une taille de particule inférieure à 4 mm,
b) mélange de résine et répartition des particules de l'étape (iii) dans le mélange de résine,
(iv)mise à disposition des matières premières des zones de résine (2), qui comprennent une résine ou des mélanges de résine,
(v) mélange des particules de l'étape (iii) avec les matières premières de l'étape (iv) et
(vi) pressage de la masse obtenue dans l'étape (v) pour donner le matériau d'amortissement (10, 20, 30) souhaité.

2. Matériau d'amortissement selon la revendication 1, **caractérisé en ce que** les zones de caoutchouc (1) présentent une part de caoutchouc de 5 à 25 % en poids, une part de fibres de 30 à 60 % en poids, une part de charge de 15 à 40 % en poids et une part de résine de 0 à 5 % en poids à chaque fois par rapport au poids des zones de caoutchouc (1).

3. Matériau d'amortissement selon la revendication 1 ou 2, **caractérisé en ce que** les zones de résine (2) présentent une part de résine de 10 à 35 % en poids, une part de fibres de 10 à 70 % en poids et une part de charge de 15 à 40 % en poids, à chaque fois par rapport au poids des zones de résine (2).

4. Matériau d'amortissement selon l'une quelconque des revendications 1 à 3, **caractérisé en ce que** les zones de caoutchouc (1) forment un réseau dans le matériau d'amortissement (10, 20, 30).

5. Matériau d'amortissement selon l'une quelconque des revendications précédentes, **caractérisé en ce que** les zones de résine (2) forment un réseau dans le matériau d'amortissement (10, 20, 30).

6. Matériau d'amortissement selon l'une quelconque des revendications précédentes, **caractérisé en ce que** les zones de caoutchouc (1) contiennent un caoutchouc NBR ou un caoutchouc à base d'éthylène-acétate de vinyle-acrylate en tant que seul caoutchouc ou en mélange avec d'autres caoutchoucs.

7. Matériau d'amortissement selon l'une quelconque des revendications précédentes, **caractérisé en ce que** les zones de résine (2) intègrent les zones de caoutchouc (1) dans le matériau d'amortissement (10, 20, 30).

8. Matériau d'amortissement selon l'une quelconque des revendications précédentes, **caractérisé en ce que** les ingrédients respectifs des zones de résine (2) et des zones de caoutchouc (1) sont répartis de manière homogène dans les zones respectives.

9. Matériau d'amortissement selon l'une quelconque des revendications précédentes, **caractérisé en ce que** le matériau d'amortissement (10, 20, 30) est formé de 50 à 90 % en volume de zones de caoutchouc (1).

10. Matériau d'amortissement selon l'une quelconque des revendications précédentes, **caractérisé en ce que** les zones de caoutchouc (1) présentent moins de 1 % en poids de résine.

11. Utilisation d'un matériau d'amortissement selon l'une quelconque des revendications précédentes en tant que couche d'amortissement ou couche intermédiaire pour une garniture de frein, qui est disposée entre le support de garnitures de freins et la couche de friction.
